**Europäisches Patentamt**

**European Patent Office**

**Office européen des brevets**

(11) Veröffentlichungsnummer: **0 225 572**
A2

# (12) EUROPÄISCHE PATENTANMELDUNG

(21) Anmeldenummer: **86116634.6**

(22) Anmeldetag: **29.11.86**

(51) Int. Cl.⁴: **B 60 S 1/48**, B 60 Q 9/00

(30) Priorität: **12.12.85 DE 3543848**

(43) Veröffentlichungstag der Anmeldung: **16.06.87**
**Patentblatt 87/25**

(84) Benannte Vertragsstaaten: **FR GB IT SE**

(71) Anmelder: **SWF Auto-Electric GmbH, Stuttgarter Str. 119, D-7120 Bietigheim-Bissingen (DE)**

(72) Erfinder: **Egner-Walter, Bruno, Käferflugstrasse 43, D-7100 Heilbronn (DE)**

(54) **Flüssigkeitsversorgungssystem, insbesondere für Scheibenwaschanlagen in Kraftfahrzeugen.**

(57) Es wird eine Waschanlage für Kraftfahrzeuge beschrieben, bei der über einen Sensor der Gefrierpunkt der Flüssigkeit erfaßt und ein Schaltsignal ausgelöst wird, sobald dieser Gefrierpunkt der Waschflüssigkeit oberhalb eines vorgegebenen Wertes liegt. Der Fahrer wird dadurch darauf hingewiesen, daß die Frostschutzmittelkonzentration in der Waschflüssigkeit zu gering ist und ein Einfrieren der Waschanlage bei tiefen Temperaturen zu befürchten ist.

0225572

## Flüssigkeitsversorgungssystem, insbesondere für Scheibenwaschanlagen in Kraftfahrzeugen

Die Erfindung bezieht sich auf ein Flüssigkeitsversorgungssystem, insbesondere für eine Scheibenwaschanlage für Kraftfahrzeuge gemäß den Merkmalen des Oberbegriffs des Anspruchs 1.

In jüngster Zeit werden erhebliche Anstrengungen unternommen, um die Funktionsfähigkeit von Scheibenwaschanlagen in Kraftfahrzeugen auch im strengen Winter sicherzustellen. Die Maßnahmen konzentrieren sich dabei überwiegend darauf, durch eine Heizeinrichtung das Einfrieren der Waschflüssigkeit im Behälter und den Flüssigkeitsleitungen zu verhindern. Dazu wird eine erhebliche Energie benötigt, die - sofern man eine elektrische Heizung verwendet - die Batterie eines Kraftfahrzeuges oft sehr stark belastet. Außerdem hat sich gezeigt, daß jedenfalls bei sehr tiefen Temperaturen die Bildung einer Eisschicht auf der kalten Scheibe auch dann nicht immer vermieden wird, wenn die Waschflüssigkeit in der Flüssigkeitsleitung und sogar noch im Bereich des Verbrauchers, also einer Düse erwärmt wird. Da derartige Heizeinrichtungen im Stillstand eines Kraftfahrzeuges nicht wirken, kann man ein Einfrieren der Waschflüssigkeit nur verhindern, wenn man der Waschflüssigkeit ein Frostschutzmittel etwa auf Alkoholbasis beimengt. Oft wird jedoch vergessen, dem Waschwasser eine geeignete Menge Frostschutzmittel zuzumischen, so daß dann bei sinkenden Temperaturen die Funktionsfähigkeit der Waschanlage nicht gewährleistet ist.

Insgesamt ist also festzustellen, daß wegen eines möglichen Ausfalls der Waschanlage bei tiefen Temperaturen die Verkehrssicherheit eines Kraftfahrzeuges bisher nicht in allen Punkten den Anforderungen entspricht.

Der vorliegenden Erfindung liegt also die Aufgabe zugrunde, die Betriebssicherheit von Flüssigkeitsversorgungssystemen in Kraftfahrzeugen und damit im Ergebnis auch die Verkehrssicherheit des Kraftfahrzeuges zu verbessern.

Diese Aufgabe wird erfindungsgemäß mit den kennzeichnenden Merkmalen des Anspruchs 1 gelöst.

Die Erfindung beruht dabei auf der Überlegung, daß der mögliche Ausfall eines Flüssigkeitsversorgungssystems in einem Kraftfahrzeug, also beispielsweise der Waschanlage oder auch des Kühlflüssigkeitssystemes für den Verbrennungsmotor dem Fahrer rechtzeitig angezeigt werden sollte. Daher ist erfindungsgemäß dem Flüssigkeitsversorgungssystem ein Sensor zur Ermittlung des Gefrierpunktes der Flüssigkeit zugeordnet.

Prinzipiell könnte man diesen Sensor und eine dem Sensor nachgeschaltete Anzeigestufe so ausbilden, daß der Gefrierpunkt kontinuierlich angezeigt wird. Eine solche Ausführung ist jedoch verhältnismäßig teuer. Deshalb wird einer Lösung der Vorzug gegeben, bei der der Sensor ein Schaltsignal auslöst, sobald der Gefrierpunkt der Flüssigkeit oberhalb eines vorgegebenen Wertes, beispielsweise oberhalb von - 30° C liegt. Liegt der Gefrierpunkt dagegen unterhalb von - 30° C, wird keine Warnanzeigevorrichtung aktiviert, weil in unseren Breiten dann nicht damit gerechnet werden muß, daß die Flüssigkeit einfriert.

Zur Ermittlung des Gefrierpunktes einer Flüssigkeit kann man alle physikalischen Größen auswerten, die sich ändern, wenn dem Waschwasser ein Frostschutzmittel beigemischt wird. Wegen des einfachen Aufbaus wird ein Sensor bevorzugt, der als Dichtemesser oder Aräometer ausgebildet ist. Mit einem solchen Aräometer kann die Frostschutzmittelkonzentration im Wasser deshalb ermittelt werden, weil die Dichte von Wasser etwa bei 1g pro $cm^3$ liegt, während die Dichte von Alkohol wesentlich geringer ist und in der Größenordnung von 0,8g pro $cm^3$ liegt.

Ein solches Aräometer kann in den Behälter für die Flüssigkeit eingebaut sein. Bevorzugt wird jedoch eine Ausführung, bei der ein Meßgefäß des Aräometers zwischen zwei Abschnitte der Flüssigkeitsleitung eingefügt wird, wobei in diesem Meßgefäß ein Tauchkörper beweglich geführt ist, dessen Bewegungsänderung von einer Abtasteinrichtung erfaßt und in einer Signalauswertestufe ausgewertet wird. Bei einer bevorzugten Weiterbildung der Erfindung hat dabei diese Signalauswertestufe ein Verzögerungsglied, damit etwa bei Erschütterungen des Fahrzeuges keine flackernde Anzeige der
von der Signalauswertestufe angesteuerten Warnlampe auftritt. Außerdem soll
diese Singalauswertestufe temperaturabhängig derart arbeiten, daß oberhalb
einer vorgegebenen Temperatur, beispielsweise oberhalb von 5 ° C eine
Aktivierung der Anzeigeeinrichtung ausgeschlossen ist. Man vermeidet auf
diese Weise ein dauerndes Aufleuchten der Warnlampe im Sommer.

Die Erfindung und deren vorteilhafte Ausgestaltungen werden nachstehend
anhand der in der Zeichnung dargestellten Ausführungsbeispiele näher
erläutert. Es zeigen:

Fig. 1   eine Waschanlage eines Kraftfahrzeuges in schematischer
Darstellung,

Fig. 2   eine andere Ausführung des Sensors und

Fig. 3   eine dritte Ausführung eines Sensors.

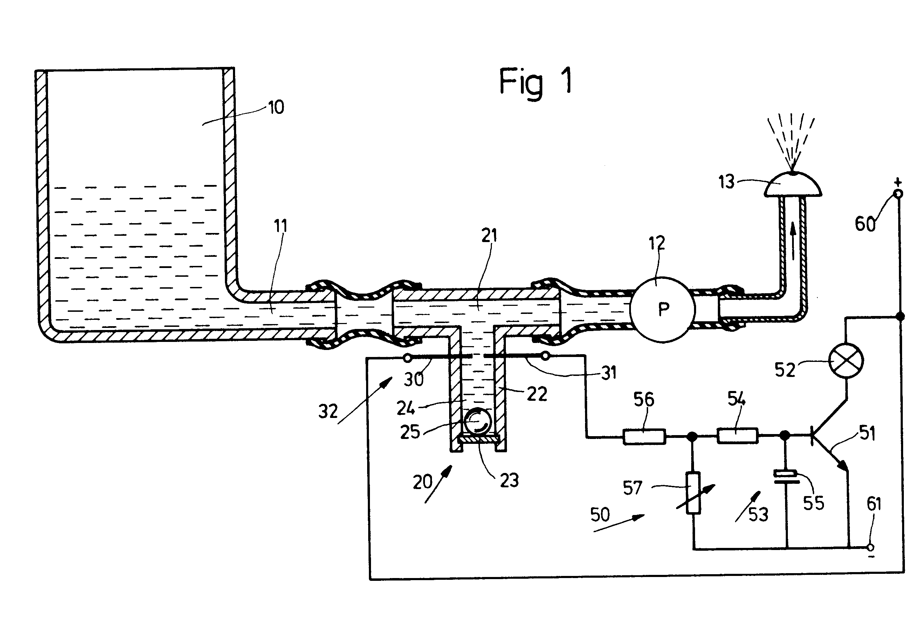

Zu der Waschanlage gemäß Fig. 1 gehört ein Behälter 10 zur Aufnahme eines
Gemisches aus Wasser und eines geeigneten Frostschutzmittels. Von diesem
Behälter führt eine Flüssigkeitsleitung 11 zu einer Förderpumpe 12, die die
Flüssigkeit zu einem Verbraucher, im vorliegenden Fall einer Waschdüse 13
fördert.

Zwischen zwei Abschnitten der Flüssigkeitsleitung 11 ist ein insgesamt mit
20 bezeichneter Sensor angeordnet. Zu diesem Sensor 20 gehört ein an sich
handelsüblicher T-förmiger Verteiler 21 aus Kunststoff, dessen eines
Rohrstück 22 durch eine Platte oder Kappe 23 abgeschlossen ist und als
Meßgefäß 24 dient, in dem ein Tauchkörper 25 beweglich geführt ist. Auf die
beiden waagerecht angeordneten koaxial zueinander ausgerichteten Rohrstücke
des T-förmigen Verteilers 21 sind die Abschnitte der Flüssigkeitsleitung 11
aufgestülpt. Zwei Kontakte 30 und 31 ragen radial in das Rohrstück 22 hinein
und bilden eine Abtasteinrichtung 32 für eine Bewegungsänderung des
Tauchkörpers 25.

Der Tauchkörper 25 ist bei dem Ausführungsbeispiel nach Fig. 1 als
Kunststoffkugel ausgebildet, die mit einer elektrisch leitenden

Silberschicht allseitig überzogen ist. Die Dichte dieses Tauchkörpers 25 inclusive der Silberschicht ist derart gewählt, daß dieser Tauchkörper bei einer ausreichenden Frostschutzmittelkonzentration in der Flüssigkeit untertaucht, wie das Fig. 1 zeigt. Bei einer geringer werdenden Frostschutzmittelkonzentration vergrößert sich jedoch die Dichte der Flüssigkeit, so daß schließlich der Tauchkörper 25 auftaucht und über seine Silberschicht die ebenfalls versilberten Kontakte 30,31 überbrückt. Da sich bei einer Veränderung der Frostschutzmittelkonzentration auch der Gefrierpunkt der Flüssigkeit ändert, kann also mit einem solchen Dichtemesser oder Aräometer über die Abtasteinrichtung 32 ein Schaltsignal ausgelöst werden, sobald der Gefrierpunkt der Flüssigkeit oberhalb eines vorgegebenen Wertes liegt. Im Prinzip könnte man also diese Kontakte 30,31 der Abtasteinrichtung 32 unmittelbar in den Betriebsstromkreis einer Warnlampe einschalten, die dann aufleuchtet, wenn etwa der Gefrierpunkt der Flüssigkeit oberhalb von - 30 ° C liegt.

Bei dem in Fig. 1 dargestellten Ausführungsbeispiel wird aber das Schaltsignal des Sensors 20 bzw. der Abtasteinrichtung 32 einer Signalauswertestufe 50 zugeführt, zu der ein Transistor 51 zur Ansteuerung der Warnlampe 52 gehört, die als Anzeigeeinrichtung dient. Der Transistor 51 wird über ein Verzögerungsglied 53 bestehend aus dem Widerstand 54 und dem Kondensator 55 angesteuert. Vor dieses Verzögerungsglied 53 ist ein Spannungsteiler mit dem Widerstand 56 und dem temperaturabhängigen Widerstand 57 geschaltet. Der Widerstandswert dieses Widerstandes 57 soll bei höheren Temperaturen kleiner sein als bei tiefen Temperaturen.

Diese Signalauswertestufe 50 funktioniert deshalb folgendermaßen:

Von dem positiven Pol 60 einer nicht näher dargestellten Spannungsquelle fließt ein Strom über die Widerstände 56 und 57 zum negativen Pol 61 der Spannungsquelle, sobald von dem Tauchkörper 25 die Kontakte 30,31 elektrisch leitend überbrückt werden. Durch den Spannungsabfall an dem temperaturabhängigen Widerstand 57 wird über den Widerstand 54 der Kondensator 55 aufgeladen, so daß nach einer bestimmten Verzögerungszeit schließlich der Transistor 51 durchgesteuert und damit die Warnlampe 52 eingeschaltet wird. Wenn aufgrund von Erschütterungen in Kraftfahrzeugen die Kontakte 30,31 nur kurzzeitig überbrückt werden, wird der Kondensator 55 nur unvollständig aufgeladen, so daß die Warnlampe 52 nicht anspricht. Bei hohen Außentemperaturen ist der Wert des Widerstandes 57 so klein, daß der Spannungsabfall unterhalb der Steuerspannung für den Transistor 51 liegt. Bei diesen Temperaturen etwa oberhalb von + 5 ° C wird also eine Aktivierung der Anzeigeeinrichtung 52 ausgeschlossen.

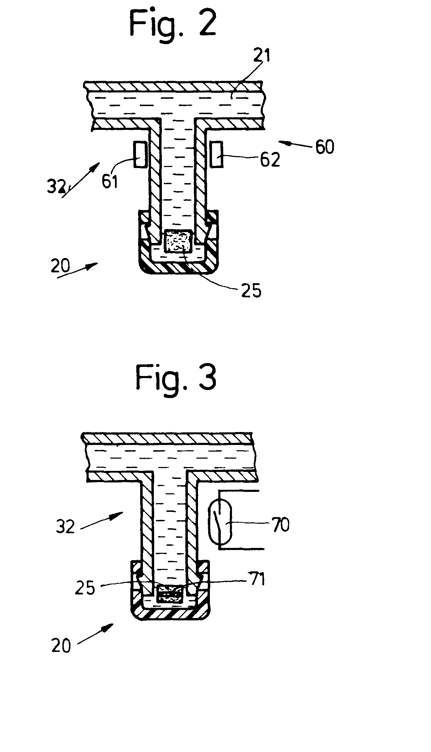

In Fig. 2 ist ein anderes Ausführungsbeispiel eines Sensors 20 dargestellt, bei der die Abtasteinrichtung 32 aus einer Lichtschranke 60 mit einem Lichtsender 61 und einem Lichtempfänger 62 besteht. Diese Lichtschranke wird von dem Tauchkörper 25 beeinflußt, der die Lichtübertragung vom Sender 61 zum Empfänger 62 unterbricht, sobald der Gefrierpunkt der Flüssigkeit oberhalb eines vorgegebenen Wertes liegt und der Tauchkörper aufgrund der größerwerdenden Dichte der Flüssigkeit auftaucht.

In Fig. 3 ist schließlich ein weiteres Ausführungsbeispiel eines Sensors dargestellt, bei der die Abtasteinrichtung ein magnetisch betätigbares Schaltelement, nämlich einen Reedkontakt 70 aufweist, der außerhalb des Meßgefäßes angeordnet ist. Der Tauchkörper 25 weist bei diesem Ausführungsbeispiel einen Magneten 71 auf, der diesen Reedkontakt schließt, sobald er in dessen Wirkungsbereich gelangt.

Bei allen gezeigten Ausführungsbeispielen befindet sich die Abtasteinrichtung im oberen Bereich des Meßgefäßes. Man könnte diese Abtasteinrichtung natürlich auch im unteren Bereich anordnen, so daß dann ein Schaltsignal ausgelöst wird, wenn der Tauchkörper seine unterste Stellung verläßt.

Schließlich wird noch darauf hingewiesen, daß sich die vorliegende Erfindung nicht nur auf eine Scheibenwaschanlage in Kraftfahrzeugen bezieht. Die Grundgedanken der Erfindung können vielmehr auch mit Vorteil bei flüssigkeitsgekühlten Verbrennungskraftmaschinen verwirklicht werden.

Zugleich mit dem Aufleuchten der Anzeigeeinrichtung oder anstelle des Aufleuchtens kann auch die Pumpe abgeschaltet werden, damit deren Zerstörung vermieden wird.

SWF Auto-Electric GmbH
7120 Bietigheim-Bissingen

PAL/A 12 909
Kübler/Tü
3.11.1985

Flüssigkeitsversorgungssystem, insbesondere für Scheibenwaschanlagen in Kraftfahrzeugen

<u>Patentansprüche:</u>

1. Flüssigkeitsversorgungssystem, insbesondere für Scheibenwaschanlagen in Kraftfahrzeugen, mit einem Behälter für die Flüssigkeit sowie einer Flüssigkeitsleitung zwischen dem Behälter und einem Verbraucher und einer Pumpe zur Förderung der Flüssigkeit, dadurch gekennzeichnet, daß ein Sensor (20) zur Ermittlung des Gefrierpunktes der Flüssigkeit vorgesehen ist.

2. Flüssigkeitsversorgungssystem nach Anspruch 1, dadurch gekennzeichnet, daß der Sensor (20) ein Schaltsignal auslöst, sobald der Gefrierpunkt der Flüssigkeit oberhalb eines vorgegebenen Wertes liegt.

3. Flüssigkeitsversorgungssystem nach Anspruch 1 oder 2, dadurch gekennzeichnet, daß der Sensor (20) als Aräometer ausgebildet ist.

4. Flüssigkeitsversorgungssystem nach Anspruch 3 , dadurch gekennzeichnet, daß zwischen zwei Abschnitten der Flüssigkeitsleitung (11) ein Meßgefäß (24) des Aräometers vorgesehen ist, in dem ein Tauchkörper (25) beweglich geführt ist, dessen Bewegungsänderung in dem Meßgefäß (24) von einer Abtasteinrichtung (32) erfaßt und in einer Signalauswertestufe (50) ausgewertet wird.

0225572

5. Flüssigkeitsversorgungssystem nach Anspruch 4, dadurch
gekennzeichnet, daß das Meßgefäß (24) ein Rohrstück eines T-förmigen
Verteilers ist, das durch eine Platte (23) oder Kappe abgeschlossen ist.

6. Flüssigkeitsversorgungssystem nach Anspruch 4 oder 5, dadurch
gekennzeichnet, daß der Tauchkörper (25) mit einer elektrisch leitenden
Schicht, vorzugsweise einer Silberschicht allseitig überzogen ist und als
Abtasteinrichtung (32) zwei vorzugsweise versilberte Kontakte (30,31)
dienen, die elektrisch leitend von dem Tauchkörper (25) überbrückt werden,
sobald der Gefrierpunkt der Flüssigkeit oberhalb eines bestimmten Wertes
liegt.

7. Flüssigkeitsversorgungssystem nach Anspruch 4 oder 5, dadurch
gekennzeichnet, daß die Abtasteinrichtung (32) als Lichtschranke (60)
ausgebildet ist, die von dem Tauchkörper (25) beeinflußt wird, sobald der
Gefrierpunkt der Flüssigkeit oberhalb eines vorgegebenen Wertes liegt.

8. Flüssigkeitsversorgungssystem nach Anspruch 4 oder 5, dadurch
gekennzeichnet, daß die Abtasteinrichtung (32) ein magnetisch betätigbares,
vorzugsweise außerhalb des Meßgefäßes (24) angeordnetes Schaltelement (70)
und der Tauchkörper (25) einen Magneten (71) aufweist, wobei dieses
Schaltelement (70) seinen Schaltzustand ändert, sobald der Gefrierpunkt der
Flüssigkeit oberhalb eines vorgegebenen Wertes liegt.

9. Flüssigkeitsversorgungssystem nach wenigstens einem der
vorhergehenden Ansprüche, dadurch gekennzeichnet, daß das Schaltsignal des
Sensors (20) über eine Signalauswertestufe (50) zum Abschalten der Pumpe
(12) und/oder zur Aktivierung einer Anzeigeeinrichtung (52) ausgenutzt wird.

10. Flüssigkeitsversorgungssystem nach Anspruch 9, dadurch
gekennzeichnet, daß die Signalauswertestufe (50) ein Verzögerungsglied (53)
für das Schaltsignal des Sensors (20) aufweist.

11. Flüssigkeitsversorgungssystem nach Anspruch 9 oder 10, dadurch
gekennzeichnet, daß die Signalauswertestufe (50) temperaturabhängig derart
arbeitet, daß oberhalb einer vorgegebenen Temperatur ein Abschalten der
Pumpe (12) und/oder eine Aktivierung der Anzeigeeinrichtung (32)
ausgeschlossen ist.

Fig 1

## Fig. 2

21
60
62
32
61
20
25

## Fig. 3

32
70
25
71
20

A 12 909 Blatt 2